# FASCICULE DE BREVET EUROPEEN

(11) **EP 1 100 974 B1**
(45) Date de publication et mention de la délivrance du brevet: **27.11.2002**
(21) Numéro de dépôt: 99927638.9
(22) Date de dépôt: 08.07.1999
(51) Int. Cl.: C22B 21/06, C22B 9/02

(54) **PROCEDE DE FILTRATION EN LIGNE D'UN METAL LIQUIDE ET DISPOSITIF POUR LA MISE EN OEUVRE DE CE PROCEDE**
VERFAHREN ZUR IN-LINE FILTRATION EINER METALLSCHMELZE UND VORRICHTUNG ZUR DURCHFÜHRUNG DIESES VERFAHRENS
METHOD FOR IN-LINE FILTERING OF A LIQUID METAL AND IMPLEMENTING DEVICE

(30) Priorité: 09.07.1998 FR 9808968
(43) Date de publication de la demande: 23.05.2001
(73) Titulaire: Membratec S.A., 3960 Sierre (CH)
(72) Inventeur: BONVIN, Emmanuel, CH-1950 Sion (CH); WUILLOUD, Eric, CH-3973 Venthône (CH)
(74) Mandataire: Nithardt, Roland
(86) Numéro de dépôt international: CH9900306
(87) Numéro de publication internationale: WO00003045

(56) Documents cités:
- EP-A- 0 291 580
- FR-A- 2 669 041
- GB-A- 1 262 933
- GB-A- 1 367 069
- US-A- 2 913 118
- PATENT ABSTRACTS OF JAPAN vol. 012, no. 398 (C-538), 21 octobre 1988 (1988-10-21) & JP 63 140070 A (NIPPON KOKAN KK), 11 juin 1988 (1988-06-11) cité dans la demande
- "Tubular ceramic filters for aluminium" ENGINEERS DIGEST, vol. 33, no. 8, août 1972 (1972-08), page 29 XP002118504 U.S.A.

## Description

### Domaine technique

La présente invention concerne un procédé de filtration en ligne d'un métal liquide, notamment de l'aluminium, dans lequel, lors d'une première étape, on introduit ledit métal liquide dans une chambre de traitement et on procède au décrassage et au dégazage dudit métal et, lors d'une seconde étape, on injecte ledit métal dégazé dans un élément filtrant poreux.

Elle concerne également un dispositif pour la mise en oeuvre de ce procédé comportant une chambre de traitement en matière réfractaire pourvue d'un canal de coulée d'entrée du métal liquide à filtrer, un élément de décrassage dudit métal et un élément de dégazage du métal décrassé, la chambre de traitement comportant une chambre de dégazage et une chambre de filtration et d'évacuation partiellement séparées par une paroi.

### Technique antérieure

Les exigences de qualité lors de l'élaboration des métaux deviennent toujours de plus en plus élevées et nécessitent des opérations de filtrage du métal liquide en vue d'obtenir une qualité exempte d'inclusions. Les connaissances et les solutions techniques actuelles sont de moins en moins adaptées pour satisfaire pleinement ces exigences, que ce soit au niveau de la qualité que d'un point de vue économique. Les différents procédés et dispositifs de traitement du métal liquide actuellement utilisés ne sont opérationnels qu'après plusieurs phases d'élaboration du métal. Ces opérations sont onéreuses en temps et en argent et n'offrent qu'une efficacité linéaire, exprimée par exemple en pourcentage d'inclusions éliminées.

Divers procédés de traitement des métaux liquides ont été proposés, notamment ceux consistant en l'injection de gaz par cannes de graphite, par rotor ou par diffuseurs graphites, ou en la filtration frontale sur filtre céramique. Actuellement la majorité des installations industrielles utilisent une combinaison de deux, voire trois, de ces techniques. Ces procédés sont coûteux et n'effectuent en aucun cas une filtration absolue des inclusions.

On connaît par la publication FR 2 669 041 un dispositif se présentant sous la forme d'un caisson divisé verticalement en deux compartiments qui communiquent au niveau du fond de ce caisson. Dans le procédé utilisé par ce dispositif le métal est dégazé et débarrassé de ses oxydes par un rotor en rotation dans le premier compartiment, puis est filtré à travers un filtre céramique disposé horizontalement dans le second compartiment avant d'être transféré dans un système récepteur.

Le filtre décrit dans le document GB 1 262 933 et destiné à retenir les impuretés d'un métal liquide en fusion en particulier l'aluminium et ses alliages, comporte une série d'éléments filtrants tubulaires parallèles liés à une plaque filtrante réalisée en grains résistant à l'aluminium fondu et liés par du verre préfondu. Ce filtre est disposé à la sortie du four afin que le métal fondu le traverse avant qu'il soit moulé et solidifié en lingots.

On connaît également par la publication européenne EP 0 291 580 un appareil de dégazage et de filtrage en ligne d'un métal fondu, dont la cuve est divisée en deux chambres. La première chambre est destinée au dégazage du métal à l'aide de cylindres en un matériau poreux disposés à l'extrémité de conduits d'injection d'un gaz, et la deuxième chambre dont l'entrée est définie par une plaque d'un matériau poreux, tel qu'une céramique, est destinée à filtrer le métal dégazé.

Le document GB 1 367 069 propose un procédé pour éliminer de façon continue les constituants métalliques d'un métal en fusion dans un récipient séparé en deux compartiments communiquant par un lit de granulés d'un matériau réfractaire. Le métal est agité dans le premier compartiment au moyen d'un dispositif d'agitation disposé à 45°.

Dans tous ces appareils, ainsi que dans celui objet du brevet US 2 913 118 dont l'utilisation est limitée aux métaux alcalins électrolytiques comme le sodium, la filtration effectuée se fait de façon frontale et non tangentielle et le flux du métal à épurer n'est pas séparé en deux flux distincts permettant d'obtenir une filtration approfondie.

L'objet de l'abrégé de la demande japonaise 63 140070 est un appareil destiné à éliminer par filtration frontale les fines impuretés d'un bain chaud tel qu'un bain de trempage pour la galvanisation. Cet appareil comporte une cuve divisée en deux compartiments par un filtre en céramique sous la forme d'une plaque agencée pour retenir les impuretés du bain en circulation. Cet appareil n'est qu'un simple dispositif de filtration d'un liquide et non pas d'un métal liquide.

### Exposé de l'invention

La présente invention se propose de pallier les inconvénients de l'art antérieur en offrant un procédé et un dispositif pour la mise en oeuvre de ce procédé qui permettent la suppression de toutes les opérations ou installations touchant la qualité du métal qui sont situées en amont du dispositif de filtration et qui aboutissent, en n'utilisant qu'une seule installation, à une très bonne filtration de n'importe quel métal liquide, quel que soit son point de fusion. Cette très bonne filtration est obtenue par le fait que le liquide à épurer est séparé en deux flux distincts, l'un épuré et envoyé vers le canal de sortie du dispositif, et l'autre contenant toutes les impuretés et renvoyé pour un nouveau traitement. Cette séparation du flux de métal décrassé et dégazé est obtenue en mettant le métal liquide sous pression avant sa filtration.

Ce but est atteint par le procédé selon l'invention tel que défini en préambule et caractérisé en ce que l'on injecte le métal liquide sous pression à vitesse élevée dans l'élément filtrant de façon tangentielle à la surface dudit élément en maintenant un écoulement sur ladite surface pour nettoyer ladite surface en filtrant simultanément ledit métal, en ce que l'on évacue la partie filtrée du métal ayant traversé ledit élément filtrant, et en ce que l'on réintroduit, dans ladite chambre de traitement, la partie restante non filtrée du métal pour un nouveau traitement.

De façon avantageuse, l'on peut augmenter l'efficacité du nettoyage de la surface de l'élément filtrant en variant la vitesse de circulation du métal liquide dans ledit élément ou en créant un écoulement turbulent du métal liquide à la surface dudit élément filtrant.

Le dispositif de filtration pour la mise en oeuvre du procédé selon l'invention, tel que défini en préambule, est caractérisé en ce qu'il comporte au moins une pompe, pourvue d'une borne d'admission et d'une borne de refoulement, pour l'injection tangentielle du métal dégazé dans au moins un élément filtrant poreux disposé dans une enceinte pourvue d'un canal de coulée de sortie du métal filtré, des moyens de réintroduction de la partie de métal non filtrée dans la chambre de traitement, et des moyens de régulation de débit et de pression de ladite partie de métal non filtrée.

De façon avantageuse, l'élément filtrant est disposé entre la pompe d'injection et les moyens de régulation de débit et de pression, l'extrémité amont dudit élément étant reliée à la borne de refoulement de ladite pompe d'injection et son extrémité aval étant reliée auxdits moyens de régulation de débit et de pression par un conduit agencé pour déboucher dans la paroi de la chambre de traitement afin de permettre la réintroduction de la partie de métal non filtrée en vue d'un nouveau traitement.

De préférence, l'élément de décrassage et l'élément de dégazage sont disposés dans la chambre de dégazage et, la pompe d'injection, l'élément filtrant et les moyens de régulation de débit et de pression sont disposés dans la chambre de filtration.

La borne d'admission de la pompe d'injection est avantageusement disposée dans l'espace défini par le fond de la chambre de traitement et l'élément de dégazage.

De préférence, la taille de ces pores est variable selon la qualité du métal filtré désirée.

Selon les formes de réalisation, l'élément filtrant peut être un élément tubulaire comportant au moins un canal longitudinal.

De préférence, l'élément filtrant, la pompe d'injection et les moyens de régulation de débit et de pression sont réalisés en un matériau choisi parmi la céramique, le graphite et un métal réfractaire poreux.

### Description sommaire des dessins

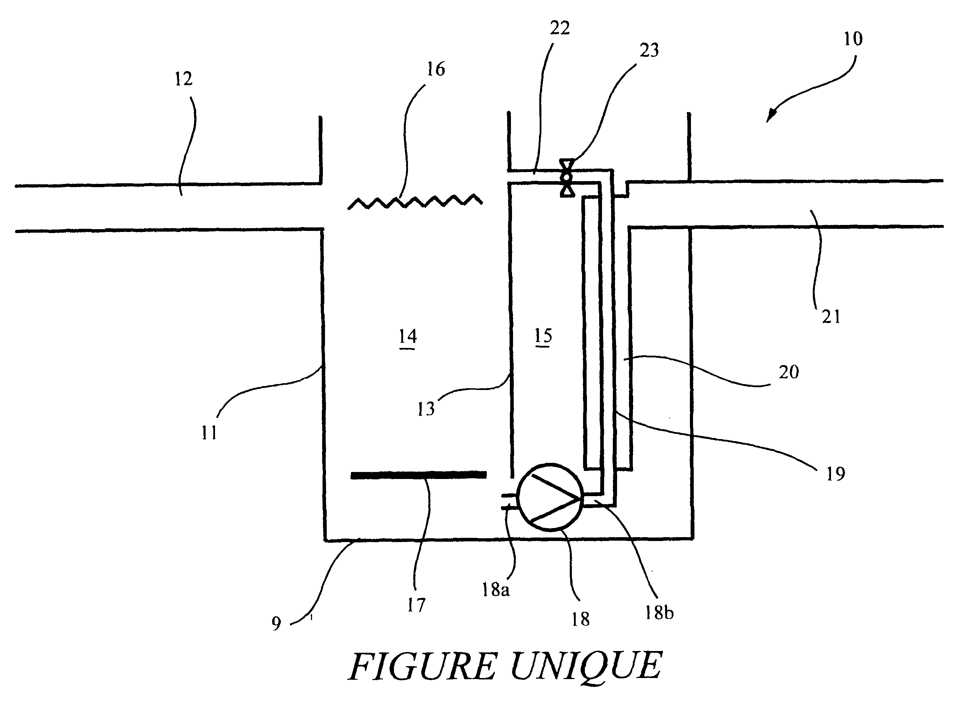

La présente invention sera mieux comprise en référence à la description d'un mode de réalisation préféré donné à titre d'exemple non limitatif et au dessin annexé dans lequel la figure unique représente de façon schématique le dispositif selon l'invention.

### Manière de réaliser l'invention

Le procédé de filtration en ligne d'un métal liquide selon l'invention consiste à mettre ledit métal sous pression à l'aide d'une pompe à métal liquide et à le faire passer sur un ou plusieurs éléments filtrants poreux, dont la taille des pores est suffisamment fine pour maintenir toutes les impuretés et les inclusions à sa surface. La porosité et la taille moyenne des pores de cet élément filtrant varient en fonction du métal liquide, des paramètres d'opération et de l'utilisation finale du produit coulé. De plus, afin d'éviter une accumulation rapide des impuretés à la surface dudit élément et de l'obturer ainsi prématurément, l'écoulement du métal liquide se fait de façon tangentielle à la surface de filtration et est maintenu par la pompe. La composante tangentielle de la vitesse de cet écoulement est réglée par des moyens de régulation de pression et maintenue suffisamment importante afin qu'elle élimine efficacement les impuretés et les inclusions qui pourraient s'accumuler à la surface de l'élément filtrant. La partie du métal liquide qui n'a pas traversé l'élément filtrant est ramenée en amont de la pompe d'injection pour un second traitement. Les impuretés et les inclusions présentes sont alors en partie éliminées par un système de décrassage de la surface du bain de métal liquide et par un système de dégazage du métal liquide.

En référence à la figure, le dispositif de filtration 10 pour la mise en oeuvre du procédé de l'invention comprend une chambre 11, en matière réfractaire adaptée à la température du métal à filtrer, dans laquelle est introduit le métal liquide à filtrer par un canal de coulée d'entrée 12. Cette chambre 11 est divisée en deux parties par une paroi partielle verticale 13 sensiblement médiane pour définir une chambre de dégazage 14 et une chambre de filtration et d'évacuation 15. La chambre de dégazage 14, dans laquelle débouche le canal de coulée d'entrée 12, est pourvue d'un élément de décrassage 16, connu en soi, disposé au niveau dudit canal d'entrée, c'est-à-dire sensiblement au niveau de la surface du bain de métal liquide. Elle comporte également un élément de dégazage 17, connu en soi, disposé dans sa partie inférieure. La chambre de filtration et d'évacuation 15 comporte, dans sa partie inférieure, une pompe 18 pour l'injection tangentielle du métal liquide dégazé dans un élément filtrant poreux 19. La pompe 18 est pourvue d'une borne d'admission 18a disposée dans l'espace défini par le fond 9 de la chambre 11 et l'élément de dégazage 17, et d'une borne de refoulement 18b reliée à l'élément filtrant 19. Cet élément filtrant 19 est disposé verticalement dans une enceinte 20 pourvue d'un canal de coulée de sortie horizontal 21 du métal filtré, opposé au canal de coulée d'entrée 12, et débouche, dans la paroi verticale 13, au-dessus de l'élément de décrassage 16, par un conduit horizontal 22 formant les moyens de réintroduction dans la chambre de traitement 11 de la partie de métal non filtrée. Ce conduit 22 est pourvu de moyens 23 pour la régulation du débit et de la pression du flux de métal réinjecté dans le dispositif. La chambre de traitement 11 est en outre pourvue d'un système de maintenance de la température, non représenté et connu en soi, qui ne sera pas décrit.

L'élément filtrant poreux 19, qui dans l'exemple illustré est de forme tubulaire, est pourvu sur sa périphérie de pores dont la taille et la disposition, qui peut être symétrique ou asymétrique, sont adaptées au type de métal à filtrer. Cet élément filtrant ainsi que la pompe 18 et les moyens de régulation débit et de pression 23 sont de préférence réalisés en céramique, en graphite, en un matériau réfractaire poreux ou en tout matériau similaire approprié.

Lors d'une coulée, le métal entre par le canal d'entrée 12 dans la chambre de dégazage 14 de la chambre 11 où il est d'abord décrassé par l'élément de décrassage 16 pour éliminer les plus grosses impuretés, puis dégazé par l'élément de dégazage 17 afin d'éliminer l'hydrogène dissous et d'activer la flottaison d'une partie des inclusions présentes dans le métal liquide. Le métal passe ensuite dans la chambre de filtration et d'évacuation 15 en étant injecté dans l'élément filtrant 19 à l'aide de la pompe 18, de façon à toujours avoir un écoulement tangentiel du métal à la surface de cet élément. Sous l'effet de la pression appliquée, une partie du métal traverse la paroi poreuse de l'élément filtrant 19 et cette partie, appelée filtrat, ressort de la chambre de traitement 11 par le canal de coulée de sortie 21 totalement exempte d'inclusions. Malgré la très petite taille des pores de l'élément filtrant, le débit du filtrat est considérable en raison de l'importante pression différentielle existant à travers la paroi de l'élément filtrant 19. La partie restante du métal liquide ne traversant pas l'élément filtrant 19, appelée concentrat, et contenant les impuretés est réintroduite dans la chambre 11 par le conduit 22. Grâce à sa vitesse tangentielle élevée, réglée par les moyens de régulation de débit et de pression 23, ce concentrat procède au nettoyage de la surface intérieure de l'élément filtrant 19 en éliminant de façon continue les inclusions et les impuretés qui y sont collées et qui obstruent les pores pour les amener à nouveau dans la chambre de dégazage 14 où elles auront une nouvelle chance d'être extraites par les éléments de décrassage 16 et de dégazage 17.

Ce dispositif est particulièrement avantageux en ce qu'il permet d'obtenir une très bonne filtration tangentielle en ligne de tous les métaux liquides, à divers points de fusion.

Diverses modifications peuvent être apportées au dispositif tel que décrit. En particulier l'élément filtrant peut être réalisé sous la forme d'un tube cylindrique poreux pourvu d'un ou de plusieurs canaux longitudinaux, ou se présenter sous la forme d'un élément poreux plan. En outre, le dispositif de filtration de l'invention peut être pourvu de plusieurs éléments filtrants et de plusieurs pompes suivant le volume du métal liquide à traiter. Ce dispositif peut par ailleurs être équipé d'une pompe additionnelle permettant encore d'améliorer le nettoyage de l'élément filtrant en changeant le sens du débit et de la pression à travers ledit élément, ou d'un dispositif permettant l'injection d'un gaz sous pression à l'une ou l'autre des extrémités dudit élément filtrant. Dans des variantes de réalisation, on peut également prévoir d'incorporer l'élément filtrant ou les moyens de régulation de pression dans le corps de la pompe.

## Revendications

1. Procédé de filtration en ligne d'un métal liquide, notamment de l'aluminium, dans lequel, lors d'une première étape, on introduit ledit métal liquide dans une chambre de traitement et on procède au décrassage et au dégazage dudit métal et, lors d'une seconde étape, on injecte ledit métal dégazé dans un élément filtrant poreux, **caractérisé en ce que** l'on injecte le métal liquide sous pression à vitesse élevée dans l'élément filtrant, de façon tangentielle à la surface dudit élément en maintenant un écoulement sur ladite surface, pour nettoyer ladite surface en filtrant simultanément ledit métal, **en ce que** l'on évacue la partie filtrée du métal ayant traversé ledit élément filtrant, et **en ce que** l'on réintroduit, dans ladite chambre de traitement, la partie restante non filtrée du métal pour un nouveau traitement.

2. Procédé selon la revendication 1, **caractérisé en ce que** l'on procède au nettoyage de la surface de l'élément filtrant en variant la vitesse de circulation du métal liquide dans ledit élément.

3. Procédé selon la revendication 1, **caractérisé en ce que** l'on procède au nettoyage de la surface de l'élément filtrant en créant un écoulement turbulent du métal liquide à la surface dudit élément.

4. Dispositif de filtration pour la mise en oeuvre du procédé de la revendication 1, comportant une chambre de traitement (11) en matière réfractaire pourvue d'un canal de coulée d'entrée (12) du métal liquide à filtrer, un élément de décrassage (16) dudit métal, un élément de dégazage (17) du métal décrassé, ladite chambre de traitement (11) comportant une chambre de dégazage (14) et une chambre de filtration et d'évacuation partiellement séparées par une paroi (13), **caractérisé en ce qu'**il comporte au moins une pompe (18), pourvue d'une borne d'admission (18a) et d'une borne de refoulement (18b), pour l'injection tangentielle du métal dégazé dans au moins un élément filtrant poreux (19) disposé dans une enceinte (20) pourvue d'un canal de coulée de sortie (21) du métal filtré, des moyens de réintroduction de la partie de métal non filtrée dans la chambre de traitement (11) et des moyens de régulation de débit et de pression (23) de ladite partie de métal non filtrée.

5. Dispositif selon la revendication 4, **caractérisé en ce que** l'élément filtrant (19) est disposé entre la pompe d'injection (18) et les moyens de régulation de débit et de pression (23), l'extrémité amont dudit élément étant reliée à la borne de refoulement (18b) de ladite pompe d'injection (18) et son extrémité aval étant reliée auxdits moyens de régulation de débit et de pression par un conduit (22) agencé pour déboucher dans la paroi (13) de la chambre (11).

6. Dispositif selon la revendication 4, **caractérisé en ce que** l'élément de décrassage et l'élément de dégazage (17) sont disposés dans la chambre de dégazage (14), et **en ce que** la pompe d'injection (18), l'élément filtrant (19) et les moyens de régulation de débit et de pression (23) sont disposés dans la chambre de filtration (15).

7. Dispositif selon la revendication 4, **caractérisé en ce que** la borne d'admission (18a) de la pompe d'injection (18) est disposée dans l'espace défini par le fond (9) de la chambre de traitement (11) et l'élément de dégazage (17).

8. Dispositif selon la revendication 4, **caractérisé en ce que** la taille des pores de l'élément filtrant (19) est variable selon la qualité du métal filtré désirée.

9. Dispositif selon la revendication 4, **caractérisé en ce que** l'élément filtrant (19) est un élément tubulaire pourvu d'au moins un canal longitudinal.

10. Dispositif selon la revendication 4, **caractérisé en ce que** l'élément filtrant (19), la pompe d'injection (18) et les moyens de régulation de débit et de pression (23) sont réalisés en un matériau choisi parmi la céramique, le graphite et un métal réfractaire poreux.

## Claims

1. A method for the in-line filtration of a liquid metal, specifically aluminium, in which the first step consists of introducing said liquid metal into a treatment chamber and proceeding to clean and degas said metal, and the second step consists of injecting said degassed metal into a porous filtration element, **characterized in that** the pressurized liquid metal is injected into the filtration element at high speed, tangential to the surface of said element, while maintaining a flow of liquid on said surface in order to clean said surface while simultaneously filtering said metal, **in that** the filtered portion of the metal, having passed through said filtration element, is evacuated, and **in that** the remaining unfiltered portion of the metal is reintroduced into said treatment chamber for a repeat treatment.

2. A method according to claim 1, **characterized in that** the surface of the filtration element is cleaned by varying the speed at which the liquid metal circulates in said element.

3. A method according to claim 1, **characterized in that** the surface of the filtration element is cleaned by creating turbulence in the stream of liquid metal on the surface of said element.

4. A filtration device implementing the method of claim 1 comprising a treatment chamber (11) made of refractory material provided with an inlet channel (12) for the liquid metal to be filtered, an element (16) for cleaning said metal, an element (17) for degassing the cleaned metal, said treatment chamber (11) comprising a degassing chamber (14) and a filtration and evacuation chamber partially separated by a wall (13), **characterized in that** it comprises at least one pump (18) with an admission terminal (18a) and a delivery terminal (18b) for tangentially injecting degassed metal into at least one porous filtration element (19) located in an enclosure (20) with an outlet channel (21) for the filtered metal, means for reintroducing the unfiltered portion of metal into the treatment chamber (11) and means for regulating the pressure and flow (23) of said unfiltered portion of the metal.

5. A device according to claim 4, **characterized in that** the filtration element (19) is located between the injection pump (18) and the means (23) for regulating pressure and flow, the upstream extremity of said element being connected to the delivery terminal (18b) of said injection pump (18) and its downstream extremity being connected to said pressure and flow regulating means through a conduit (22) which opens into the wall (13) of the chamber (11).

6. A device according to claim 4, **characterized in that** the cleaning element and the degassing element (17) are located in the degassing chamber (14) and **in that** the injection pump (18), the filtration element (19) and the means (23) for regulating pressure and flow are located in the filtration chamber (15).

7. A device according to claim 4, **characterized in that** the admission terminal (18a) of the injection pump (18) is located in the area defined by the base (9) of the treatment chamber (11) and the degassing element (17).

8. A device according to claim 4, **characterized in that** the size of the pores in the filtration element (19) is variable depending upon the desired quality of the filtered metal.

9. A device according to claim 4, **characterized in that** the filtration element (19) is a tubular element equipped with at least one longitudinal channel.

10. A device according to claim 4, **characterized in that** the filtration element (19), the injection pump (18) and the means (23) for regulating pressure and flow are made of a material such as ceramic, graphite, or a porous, refractory metal.

## Patentansprüche

1. Verfahren für eine Reihenfiltration eines Flüssigmetalls, insbesondere Aluminium, bei welchem in einem ersten Schritt das Flüssigmetall in eine Behandlungskammer eingeleitet wird und das Metall einem Reinigungs- und Entgasungsverfahren unterzogen wird und bei welchem, in einem zweiten Schritt, das entgaste Metall in ein poröses Filtrationselement injiziert wird,
**dadurch gekennzeichnet, dass**
das Flüssigmetall unter Druck und mit hoher Geschwindigkeit tangential zur Oberfläche des Elementes in das Filtrationselement injiziert wird, wobei eine Fließbewegung auf der Oberfläche aufrecht erhalten wird, um die Oberfläche zu reinigen und gleichzeitig das Metall zu filtern, dass der gefilterte Teil des Metalls, welcher das Filtrationselement durchquert hat, abgelassen wird, und dass der nicht gefilterte Restanteil des Metalls für eine neue Behandlung in die Behandlungskammer wiedereingeführt wird.

2. Verfahren gemäß Anspruch 1,
**dadurch gekennzeichnet, dass**
eine Reinigung der Oberfläche des Filtrationselementes vorgenommen wird, indem die Zirkulationsgeschwindigkeit des Flüssigmetalls in dem Element verändert wird.

3. Verfahren gemäß Anspruch 1,
**dadurch gekennzeichnet, dass**
die Reinigung der Oberfläche des Filtrationselementes vorgenommen wird, indem auf der Oberfläche des Elementes eine Turbulenzströmung erzeugt wird.

4. Filtrationsvorrichtung zum Durchführen des Verfahrens gemäß Anspruch 1, bestehend aus einer Behandlungskammer (11) aus feuerfesten Material, welche mit einer Eingießrinne (12) für das zu filternde Flüssigmetall ausgestattet ist, einem Reinigungselement (16) für das Metall, einem Entgasungselement (17) für das gereinigte Metall, wobei die Behandlungskammer (11) eine Entgasungskammer (14) und eine Filtrations- und Ablasskammer, getrennt durch eine Wand (13), umfasst,
**dadurch gekennzeichnet, dass**
sie wenigstens eine Pumpe (18) beinhaltet, welche mit einem Einlassanschluss (18a) und einem Stauanschluss (18b) ausgestattet ist zur tangentialen Injektion des entgasten Metalls in wenigstens ein poröses Filterelement, angeordnet in einer Einfassung (20), welche mit einer Ausflußrinne (21) für das gefilterte Metall, Vorrichtungen zum erneuten Einleiten des noch nicht gefilterten Teils des Metalls in die Behandlungskammer (11) sowie Vorrichtungen zur Regelung des Durchsatzes und des Drucks (23) des noch nicht gefilterten Metallanteils ausgestattet ist.

5. Vorrichtung gemäß Anspruch 4,
**dadurch gekennzeichnet, dass**
das Filtrationselement (19) zwischen der Injektionspumpe (18) und den Vorrichtungen zur Regelung des Durchsatzes und des Drucks (23) angeordnet ist, wobei das stromaufwärts gelegene Ende des Elementes mit dem Einlassanschluss (18a) der Injektionspumpe (18) verbunden ist und das stromabwärts gelegene Ende des Elementes mit den Vorrichtungen zur Regelung des Durchsatzes und des Drucks (23) mittels einer Leitung (22) verbunden ist, welche so angeordnet ist, dass diese in die Wand (13) der Kammer (11) mündet.

6. Vorrichtung gemäß Anspruch 4,
**dadurch gekennzeichnet, dass**
das Reinigungselement und das Entgasungselement (17) in der Entgasungskammer (14) angeordnet sind, und dass die Injektionspumpe (18), das Filtrationselement (19) und die Vorrichtungen zur Regelung des Durchsatzes und des Drucks (23) in der Filtrationskammer (15) angeordnet sind.

7. Vorrichtung gemäß Anspruch 4,
**dadurch gekennzeichnet, dass**
der Einlassanschluss (18a) der Injektionspumpe (18) in dem durch den Boden (9) der Behandlungskammer (11) und dem Entgasungselement (17) definierten Raum angeordnet ist.

8. Vorrichtung gemäß Anspruch 4,
**dadurch gekennzeichnet, dass**
die Porengröße des Filtrationselementes (19) entsprechend der gewünschten Qualität des zu filternden Metalls variierbar ist.

9. Vorrichtung gemäß Anspruch 4,
**dadurch gekennzeichnet, dass**
das Filtrationselement (19) ein rohrförmiges Element ist, das mit wenigstens einem Längskanal versehen ist.

10. Vorrichtung gemäß Anspruch 4,
**dadurch gekennzeichnet, dass**
das Filtrationselement (19), die Injektionspumpe (18) und die Vorrichtungen zur Regelung des Durchsatzes und des Drucks (23) aus einem Material hergestellt sind, welches aus Keramik, Graphit oder einem porösen feuerfesten Metall ausgewählt ist.
